Europäisches Patentamt

European Patent Office

Office européen des brevets

(19)

(11) Publication number:

**0 024 846**

**A2**

(12)

# EUROPEAN PATENT APPLICATION

(21) Application number: **80302751.5**

(22) Date of filing: **11.08.80**

(51) Int. Cl.³: **B 67 D 5/06**
**B 67 D 5/54**

(30) Priority: **23.08.79 GB 7929367**
**17.03.80 GB 8009002**

(43) Date of publication of application:
**11.03.81 Bulletin 81/10**

(84) Designated Contracting States:
**AT BE CH DE FR IT LI LU NL SE**

(71) Applicant: **WHITBREAD & CO. LTD.**
**Chiswell Street**
**London EC1Y 4SD(GB)**

(72) Inventor: **Clark, Alan**
**42 Ailsworth Road**
**Luton Bedfordshire(GB)**

(72) Inventor: **Hartshorne, John Stuart**
**4 Fairfield Close Adwickbury**
**Harpenden Hertfordshire(GB)**

(74) Representative: **Warden, John C. et al,**
**R.G.C. JENKINS & CO. 53-64 Chancery Lane**
**London WC2A 1QU(GB)**

(54) **Improvements in the delivery of liquid.**

(57) A pumping unit for pumping liquid, especially ale or lager beer, from a vehicle to tanks in a cellar as demountable. The unit comprises as components a pump (10), a motor driven reeled hose (11) and a delivery meter (16). The components are mounted and arranged on a supporting framework to form an integral movable unit suitable for installation on a flat platform vehicle. The framework has a load supporting base (2), intermediate connecting means (1) and a load supporting roof (7) (8) comprising pockets to receive the forks of a fork lift truck to enable the unit to be transported from place to place. The unit is also provided with a rack (39) and clamps (40) for clamping several carbon dioxide containing cylinders (17) within the unit, the carbon dioxide gas for aiding in pumping the liquid.

Fig. 10

EP 0 024 846 A2

IMPROVEMENTS IN THE DELIVERY OF LIQUID

The present invention relates to the delivery of liquid, especially beer and lager, to selected sites and is particularly concerned with pumping units or so called "service units".

In the brewing industry draught ales and lager beer are transported from the brewery to the customer, for example a public house or private club, in a tanker vehicle which usually has securely and immovably mounted tanks holding the liquid. The tankers incorporate a service unit which enables the ale or lager to be pumped from the tank compartments on the vehicle to the tanks in the customer's cellar. Hitherto, the service unit has normally been immovably mounted to the tanker vehicle.

The service unit generally contains as components an electrically operated pump for connection to the appropriate supply, a motor driven reel on which is wound a hose to deliver the ale or lager to the cellar from the pump and a metering unit, possibly with a ticket printout to record the quantity of ale or lager delivered to each customer. Generally each compartment is also connectable to a source of carbon dioxide gas injected, in use, through the top of the vehicle tank to extert a pressure on the ale or lager to enable the ale or lager to be pumped without "fobbing", that is, the pumping of air or froth rather than the ale or lager itself.

Both tanks and service units require regular and meticulous cleaning and this presents both technical and logistical problems. In practice cleaning can only be carried out on a relatively few sites where the necessary facilities are available and even at these sites, cleaning of the tanks and service units in situ on the vehicle presents problems. In practice the tanker vehicles are large and expensive and after a day's delivery have to be returned to the central cleaning site for cleaning during the night. Loading and distribution is effected from localised sites which do not have cleaning facilities. Often only relatively small quantities of liquid are needed in any one distribution circuit where the use of a large expensive tanker is uneconomic.

The present invention is directed towards solving these problems.

According to the invention there is provided an apparatus for the delivery of liquid including as components a liquid input means, a pump, a reeled output hose, an electric motor arranged to drive the output hose reel, a delivery meter having a sensor and a read-out means, and an interior liquid circuit connecting the liquid input means via the pump and the sensor to the output hose through the axis of the output hose reel, characterised in that the said components together with a locating means for a unit or units supplying a gas over-pressure are mounted and arranged within a supporting framework to form an integral movable unit suitable for placement on a flat platform vehicle, the framework comprising a load supporting base structure, a load supporting roof structure, load supporting intermediate uprights, and fork receiving pockets.

The preferred apparatus includes within said framework a reeled input hose, preferably arranged to be driven from the first mentioned or a second electric motor and connected within said liquid circuit with said input means at its free end.

The preferred unit also includes within the framework means for maintaining a plurality of gas-containing vessels in position within the unit.

The invention is also inclusive of a vehicle for transporting liquid for delivery to selected sites, the vehicle including a platform, a plurality of removably secured tanks on the platform and at least one movable delivery unit as described above on the platform.

A preferred form of vehicle includes two such delivery units disposed back to back and facing opposite sides of the vehicle. The vehicle can then be used to deliver two or more types of products during a single delivery circuit.

The use of movable delivery units and movable tanks allows for a much more flexible and economic delivery system. The actual delivery vehicle can be non-specialised e.g. a normal package beer-delivery vehicle and maintained at the localised distribution sites, so that relatively small journeys and loads can be undertaken economically. Large flat loader lorries, which may be articulated lorries, can be used for transporting the removable tanks and service units to a central depot for cleaning and subsequent return to the localised depots. Such large lorries can be fully loaded so as to be economical, with sufficient tanks for several of the smaller delivery lorries or other packaged goods. The preferred movable delivery units are relatively small and of substantially cubic construction and can be stacked one above the other by means of forklift trucks and easily unloaded and reloaded upon the large vehicles for cleaning.

The preferred service units are also fully self-contained so that it is not possible for odd items of equipment which require cleaning to be lost or mislaid.

Embodiments of the invention will now be particularly described by way of example only with reference to the accompanying drawings in which:-

Figure 1 is a plan view of a service unit with its roof structure removed;

Figure 2 is a rear elevation of the unit with a door panel removed;

Figure 3 is a side elevation of the unit with side panelling removed, and

Figure 4 is an isometric view of the unit, all panelling being removed;

Figure 5 is a front elevational view of a second embodiment of movable service unit with the interior exposed;

Figure 6 is a rear elevational view of the second embodiment with the interior exposed;

Figure 7 is a side elevational view, viewed from the right in Figure 5 of the second embodiment;

Figure 8 is a top plan view of the second embodiment with the cover plate removed;

Figure 9 is a section along the line IX-IX of Figure 7; and

Figure 10 is an isometric view showing the arrangement of piping in the embodiment of Figure 5.

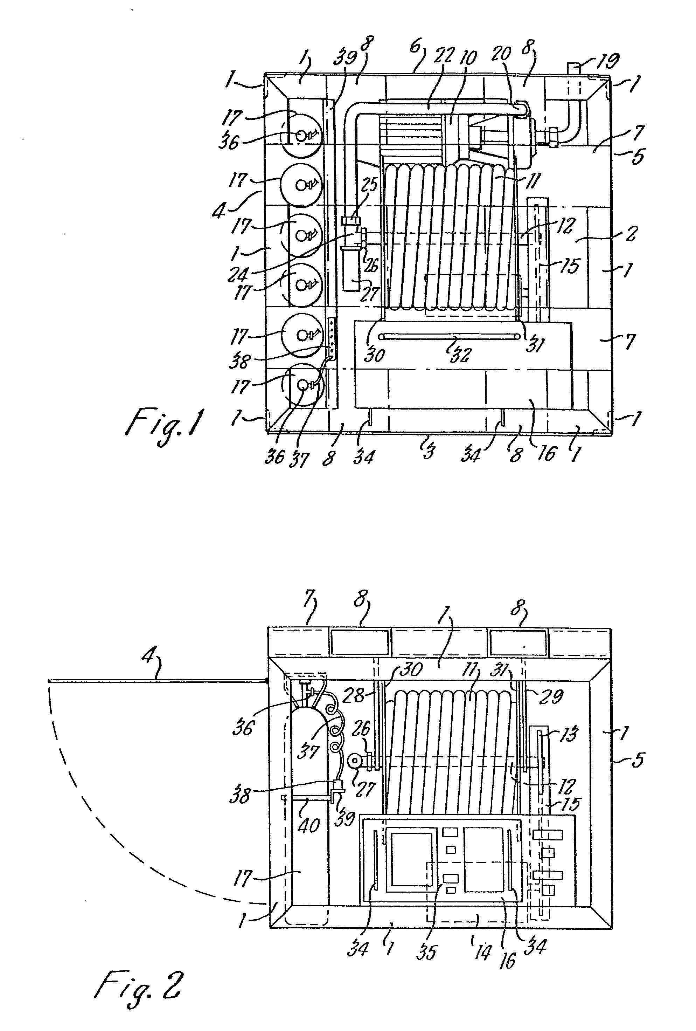

Referring to Figures 1 to 4 the service unit comprises a framework of twelve mild steel right angle members 1 welded together so as to form an open cuboidal structure. The base comprises a sheet 2 of 10 gauge stainless steel welded to the lowermost angled members. The rear of the unit is closable by a top hinged door panel 3 (see Figure 3) of aluminium sheeting provided with support stays (not shown). One side of the unit is provided with a similar top hinged door panel 4 (see Figure 2) of aluminium sheeting. The interior of the unit is therefore accessible from two sides. The remaining panel sides 5,6 are fiber glass sheets releasably screw fitted to their respective members 1. The roof of the framework comprises a lattice-like assembly of mild steel box section members, there being two spaced elongate members 7 welded to the transversely extending uppermost frame members 1 and six shorter cross members extending at right angles to members 7. Two outer cross members 8 are welded to each of the longitudinally extending frame members 1 at either side of the frame and to one side of each member 7, corresponding pairs of members 8 being longitudinally aligned. Two spaced intermediate cross members 9 are aligned with their respective outer cross members 8 and are welded to the opposite sides of each member 7. The members 7 are provided with apertures (not shown) in their sides at the position where they are welded to the cross members 8,9, the apertures being substantially matched in size and shape to the internal dimensions of members 8,9. Thus the forks of a fork lift truck can engage the roof via the rectangular apertures in the box section lattice from four sides of the unit to enable it to be lifted and transported from place to place.

The unit also comprises a pump 10 for pumping the liquid, for example ale or lager, from a tank to a cellar, a hose 11 connected to the pump and coiled on a hollow reel 12 for delivery of the liquid to the cellar, a belt driven pulley 13 for rotating the reel 12, a motor 14 for driving the belt 15, a metering unit 16 for metering the quantity of liquid delivered and six cylinders 17 containing carbon dioxide gas for purposes to be described.

As shown in Figures 1 and 3 the pump 10 comprises a one horse power electrically operated liquid-delivery pump of conventional design such as the D.C. cowl-less pump supplied by Midland Dairy Machines Ltd. The pump 10 can be driven from a mains (or reduced mains) electricity supply or via the alternator of a vehicle internal combustion engine. The pump 10 is bolted to a rail 18 extending transversely of the unit and has a stainless steel elbowed inlet pipe 19 with a two inch (56mm) RJT threaded union (not shown) for coupling to a suitable flexible hose (not shown), The hose is, in use, connected to a connecting point in a tank containing the ale or lager (not shown). Extending upwardly from the pump 9 is an outlet pipe 20 with a one and a half inch (38 mm) IDF union 21. This is connected to a double elbowed delivery pipe 22 which connects the pump 10 to the hose reel 12.

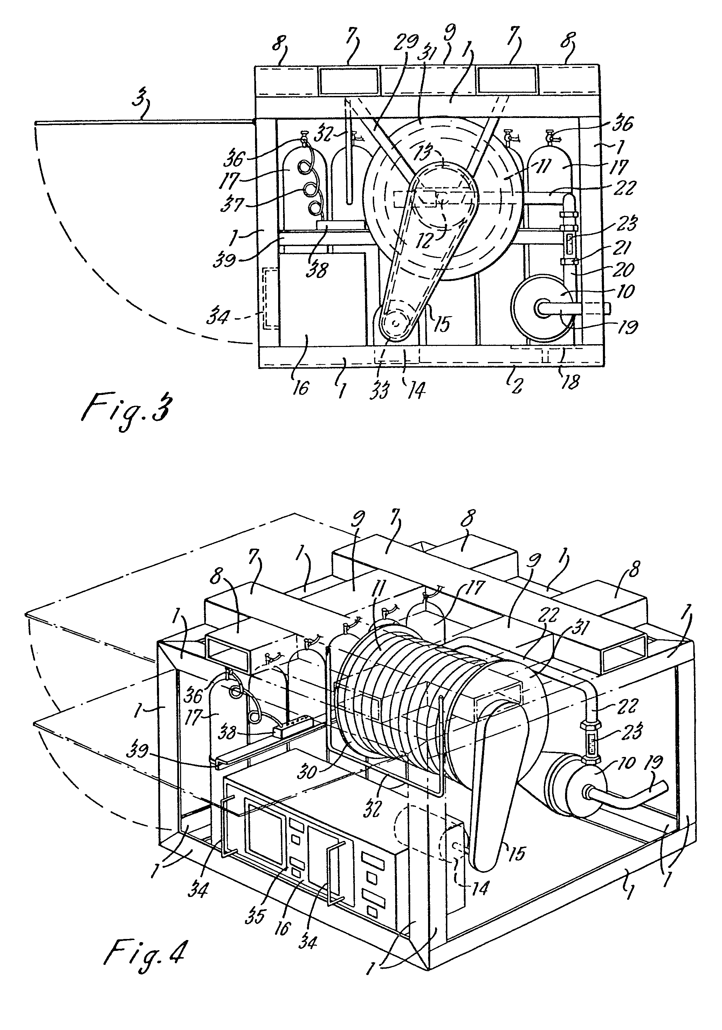

As shown in Figures 3 and 4 the vertical portion of the pipe 22 is provided with a transparent in-line sight glass 23 to enable the operators of the unit to detect the presence of "fob" in the pipe 22. In addition a conventional "fob" detector unit (not shown) such as a Bestobell type (BEP) 10/2 liquid sensing probe is also located within a vertical portion of the pipe 22 as an additional means for detecting "fob".

The delivery pipe 22 is connected to the hose reel 12 via an elbow 24 which is coupled to the pipe 22 via a conventional nut coupling 25 and to the reel 12 via a stainless steel Thomson swing joint 26 of type BS 512. Housed within an extension of the elbow is a 32 mm diameter APV type A2 Zephyr valve and control unit 27.

The control unit 27 is connected by an electrical lead (not shown) to the "fob" detector unit. When the detector unit detects "fob" it transmits an electrical signal to unit 27 to prevent metering occurring. When the "fob" has cleared, the metering recommences.

The hose reel 12 comprises a hollow 32 mm diameter stainless steel pipe closed at one end and as already mentioned connected via a Thomson swing joint 26, at its other end to elbow 24. The reel 12 can thereby rotate relative to the elbow 24 while maintaining a seal. The reel 12 is supported from the roof members 7 by a pair of angled stays 28,29 which are spaced apart along the reel 12 and are welded at their ends to the underneath of the members 7. The stays 28,29 are provided with bearings (not shown) within which the reel 12 is able to rotate. The reel 12 has a pair of annular stops 30,31 for retaining the wound hose on the reel 12. While not shown the reel 12 has at a point near one of its ends a stainless steel offtake pipe initially extending radially from the reel 12 and then curving in an arcuate manner. The hose 11 is connected to the offtake pipe which because it is curved enables the hose 11 to be coiled without those coils nearest the reel 12 being kinked.

The hose 11 itself comprises a 30 metre long, 32 mm diameter "purple snake" hose with, at its free end, a valve (not shown) of appropriate dimensions for the tank being filled, to enable the hose 11 to be coupled to the tank or barrel in the cellar of the customer. Shown schematically in the figures is a guide rail 32 attached to the stays 28,29 for guiding the hose 11 during uncoiling and coiling.

As shown in Figure 3 the hose 11 can be coiled or uncoiled by rotation of reel 12 under the action of a motor driven pulley 13 which is secured to the reel 12 beyond stop 31, pulley 13 being rotated via a belt 15 connected to a pulley 33 of an electric motor 14. The motor 14 is conventional and may for instance be a one and a half horse power, 24V DC type motor with reducing gear and clutch. A typical motor is the "Neco" geared motor unit. The motor 14 can be mains (or reduced mains) operated or can be connected to a vehicle alternator. The motor 14 is bolted to the stainless steel base 2.

The metering unit 16 shown in Figure 2 is conventional and can comprise a Bestobell Meterflow Ltd.

batch counter type 171 with a ticket printer mounted on base 2 and provided with a pair of handles 34 to enable the meter to be lifted into and out of the unit. Housed within the pipe near to elbow 24 is a turbine flowmeter (not shown) of conventional design such as a 32 mm uni-directional turbine flowmeter type 313 manufactured by Bestobell Ltd. This is connected by an electrical lead (not shown) to an input socket in the unit 16 and transmits electrical signals representative of the liquid flow, the signals being totalised and suitably digitally displayed by unit 16. A ticket is issued to the customer from the printer when the desired quantity of liquid has been delivered. The unit 16 includes a starter panel 35 for starting and stopping pump 10 and motor 14.

Disposed within the demountable service unit are six 14lb steel cylinders 17 containing carbon dioxide gas at less than 15 psi (1 bar). As shown in Figure 2 each cylinder 17 stands on the stainless steel base 2 and is provided with a conventional manually operable valve 36 with a flexible hose 37 connectable to a manifold 38. The manifold 38 is provided with a detachable reducing valve (not shown) such as valve No. TSM 287 manufactured by Redditch Controls Ltd. The valve is set for the delivery of gas at a specified pressure (5 psi or 1/3 bar for ale, 15 psi or 1 bar for lager) and is connected, in use, via a hose (not shown) to the top of a tank containing the liquid so as to apply a "top pressure" to the liquid. This enables the liquid to be pumped through the service unit with reduced fobbing. The Redditch valve can be adjusted for the particular application desired. For instance, where ale is to be delivered the valve is set at 5 psi (1/3 bar) and where lager is to be delivered this valve is set at 15 psi (1 bar).

As shown in Figure 2 the manifold 38 is mounted on a steel angle 39 extending longitudinally of the service unit and secured to vertically extending angles (not showm) at either side of the unit. Angle 39 provides a rack for the cylinders and has six circular clamps 40 (see Figure 2) which provides releasable supports for each cylinder.

In use, four of the six cylinders 17 are designated as "top pressure" cylinders while one cylinder 17 is designated a reserve. While not shown in the figures the remaining cylinder is connected via its hose 37 to an inlet on elbow 24 to maintain a gas pressure on the Zephyr valve whereby when this is released by the control unit 27, the valve is closed by the gas pressure from the cylinder. The valve opens under spring-bias when the gas pressure is released.

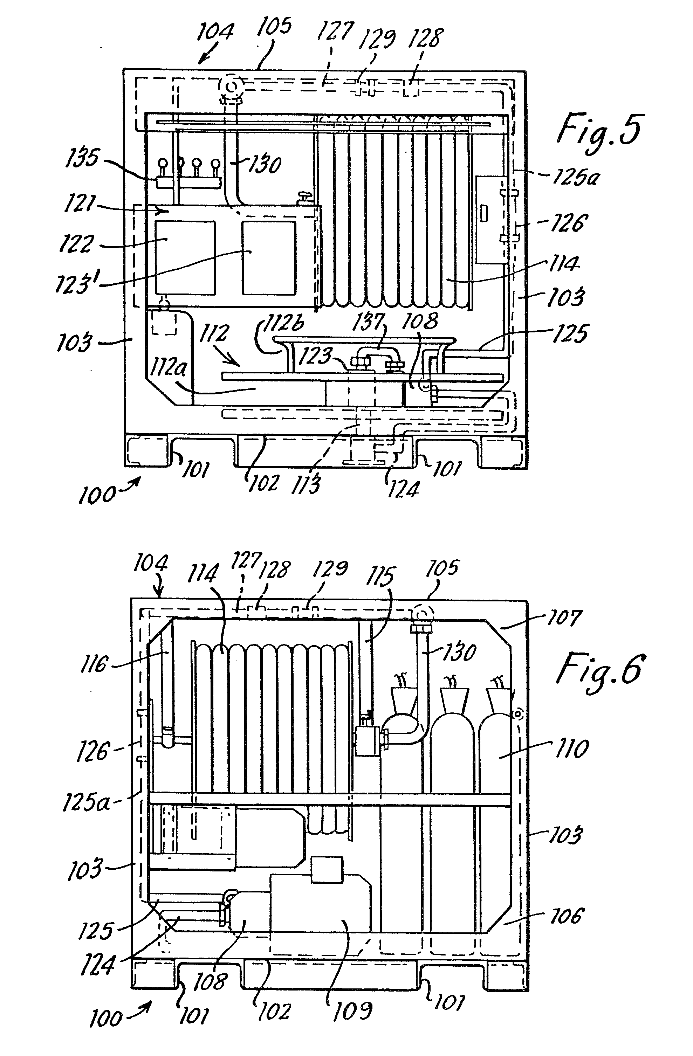

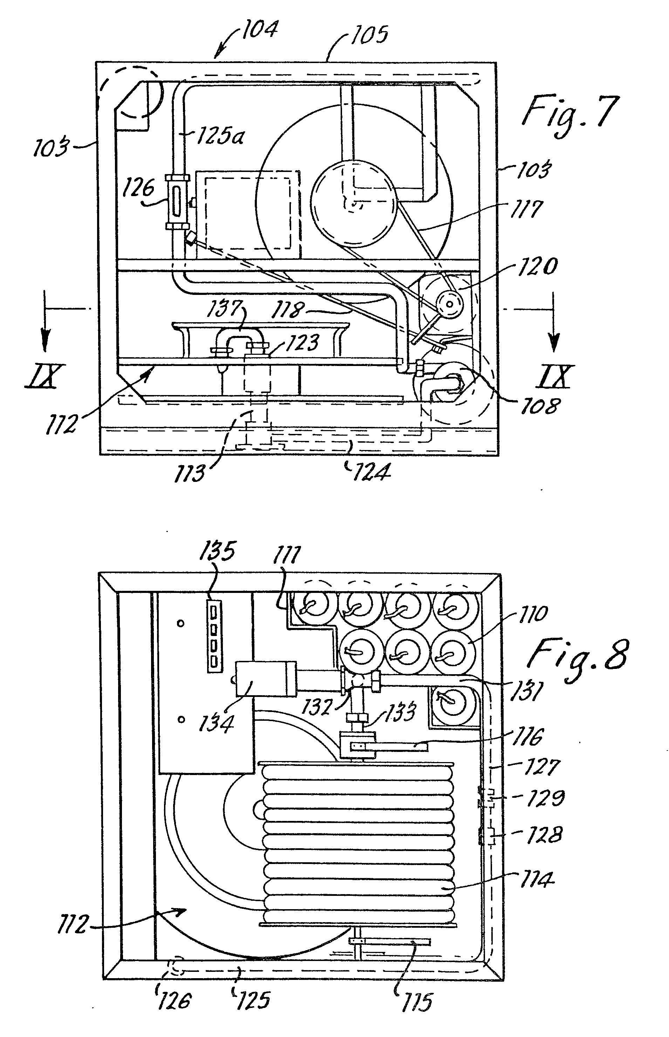

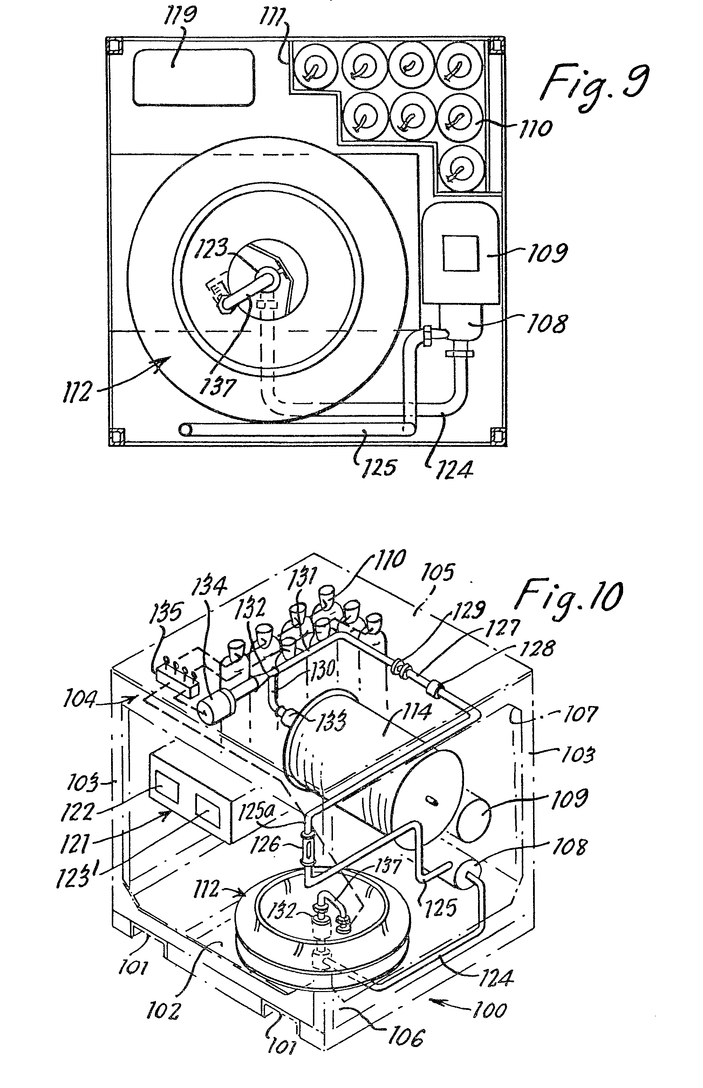

Turning to Figures 5 to 10 there is shown a modified service unit. The framework has been made extremely robust. The base frame 100 is formed from channel section members of steel, with the channels facing inwardly, the front and rear channel members being cut away to allow the insertion of parallel spaced channel members 101, extending fore and aft covered by welded covers of heavy gauge steel to provide for fork pockets. The bottom frame is covered with a floor plate 102 preferably of stainless steel. The uprights 103 are of square hollow section steel, welded at the bottom to the base frame 100 and at the top to steel angle section members constituting a roof frame 104 which is covered by a welded top plate 105 of heavy gauge steel. Welded skirt members 106, 107 are provided respectively at the bottom and top of the frame and are recessed slightly from the outer edge of the frame to provide mountings for screw fastened cover panels which may be of steel or aluminium except at the front where there is preferably provided a roller blind which may be of slats covered with a plastic sheet material such as nylon. The interior of the unit is therefore accessible from all sides for servicing and easily accessible from the front for operation.

The pump 108 is preferably a centrifugal pump, made by Midland Dairy Machines Limited, which is capable of delivering beer at about 150 l/min at about 17 psi (1.1 bar). It is driven by an electric motor 109 up to one and a half horse power capacity. As viewed in Figure 9 this is located at the rear of the unit, and displaced towards the right-hand side so as to allow the rear left-hand corner to be utilised for the storage of $CO_2$ cylinders. As shown, 8 such cylinders 110 are retained in this corner by a spring loaded retaining bar 111 which is appropriately shaped to conform to the eight close packed cylinders.

Most of the floor area in a zone near the floor is occupied by an input hose reel 112. As shown more particularly in Figure 5 this has a lower section 112a for carrying the input hose and an upper section 112b for carrying a pressurised $CO_2$ hose. The reel 112 is mounted on a vertical spindle 113 and is constructed with its radius substantially greater than its axial length. It is displaced towards the front right-hand corner and occupies a large floor area but relatively little height.

Disposed above and behind the reel 112 and displaced towards the right-hand side of the unit, clear of the $CO_2$ bottles, is the output or delivery hose reel 114 which is similar to that of Figure 1.
This is mounted on brackets 115, 116 welded to the
frame via cross-bars which are not shown.  The reel 114
is driven by an electric  motor 120 which is geared and
provided with a clutch operated V-belt 117, the clutch
lever being indicated at 118.

Over the floor area to the front left of the
reel 112 is an automatic rewind electric cable reeling
drum 119 providing a mains (or reduced mains) input for
the electric motors and other electrical accessories.
An alternative input is provided from a 24 volt DC
source provided by batteries carried by the lorry and
which can be charged from the lorry engine or if necessary
from a mains source.

The reel 112 may be hand driven, since the input
reel is relatively short, but is preferably electrically
driven e.g. by a clutch drive (not shown) from the
electric motor 120 used to drive the reel 114.

A stainless steel control box 121 is mounted
forwardly of the reel 114 adjacent the front face of the
unit to house the delivery meter print out unit indicated
at 122 and a control unit 123' containing the various
electric controls.

The flow circuit more particularly illustrated
in Figure 10, will now be described.  The ends of both
hoses are provided with Hanson couplings to maintain the pipes full of beer. The input reel may consist of 30 feet (10 m) of 32 mm rubber hose of suitable type. Its inner end is connected through a Thompson swing joint 123 through pipe 124, under the reel 112 to the input of the pump 108. The output of the pump 108 is connected to pipe 125 which is carried round the right-hand side of the unit to the front, where there is a vertical section 125a housing a 32mm diameter sight glass 126 and then towards the rear of the unit near the roof, and then towards the left-hand side in a section 127 where there is inserted a flow straightener 128 and a meter turbine 129, e.g. a 32 mm Bestobell Meterflow turbine. The pipe 127 then connects via pipes 130, 131 with elbow joint 132. This in turn is connected to a Thompson swing joint 133 and the Zephyr valve and control unit 134, described in connection with Figure 1.

Above the control box 121 is a $CO_2$ control unit 135 which comprises a manifold with connections to the gas cylinders and individual outlets with pressure reducing valves and gauges 136. Four such gauges are shown, one indicating the input pressure (about 700 psi or 47 bars) two indicating output pressures of about 15 psi (1 bar) for connection to the $CO_2$ hose, and one indicating an output pressure of about 60 psi (4 bars) for operating the Zephyr valve. The gas cylinders are connected in two banks of four each to the control unit 135. From the manifold a pressurised $CO_2$ line (not shown) passes to the elbow connection 137 at the hub of the tandem reel 112 where connection is made through a swing joint to the reeled $CO_2$ pipe in the reel compartment 112b. Connection of the end of the reel to the tanks is conventional, a valve being located in the coupling to prevent release of $CO_2$ during disconnection.

While a tandem reel has been shown at 112, in another form of the invention a single reel is used, and the $CO_2$ pipe and beer input pipe are combined as a single reelable unit.

It will be apparent that the present embodiment provides a very sturdy and compact and completely self-contained unit. The overall height of the unit is for example 4ft 7 inchs (1.40 meters), the front dimension and side dimension each being 3ft 10 inches (1.17 meters). The depth is therefore less than 1.2 meters and two such units can be easily accommodated e.g. back to back on a small lorry to serve alternate rows of movable tanks. The overall weight of the unit may be kept under 750 Kg.

Since the service unit is readily movable, itsmaintenance is relatively easy as it can be moved to a maintenance shop. As its interior is easily accessible, maintaining, servicing or replacing any component is relatively simple.

Furthermore the fact that the unit is movable renders it possible to dispense altogether with an expensive custom-made tanker and to use instead an ordinary cheaper commercial vehicle such as a flat-platformed lorry fitted with tanks containing the ale or lager to be delivered. The tanks themselves can be conventional tanks rendered movable by fitting bases with fork pockets. When demand is low the lorry will only need to carry few tanks. The lorry fleet itself can be much smaller than the usual heavy tanker fleet. Bottles in crates can also be delivered together with kegs or casks as well as the tanks containing the draught ale or lager thus enabling delivery to be far more flexible.

Where two service units are used, it is possible to deliver simultaneously two different types of ale, or ale and lager together, without contamination of one by the other during pumping by utilising one unit for the delivery of one liquid and the other unit for delivery of the other liquid.

The present service units can be used in the widely utilised "Tautliner" (Registered Trade Mark) delivery system. In this case a pair of units are mounted side by side across a lorry platform provided with the "Tautliner" curtains which maintain the units in position during transit, the units needing no other means of support such as straps, ropes, etc, although safety traps with clip couplings may be employed as a precaution.

CLAIMS:

1. Apparatus for the delivery of liquid including as components a liquid input means (19,112), a pump (10,108), a reeled output hose (11,114), an electric motor (14,120) arranged to drive the output hose reel, a delivery meter having a sensor (129) and a read-out means (122), and an interior liquid circuit connecting the liquid input means via the pump and the sensor to the output hose through the axis of the output hose reel, characterised in that the said components together with a locating means for a unit or units supplying a gas over-pressure are mounted and arranged within a supporting framework (1-9, 100-106) to form an integral movable unit suitable for placement on a flat platform vehicle, the framework comprising a load supporting base structure, a load supporting roof structure, load supporting intermediate uprights, and fork receiving pockets (7,101).

2. Apparatus as claimed in claim 1, wherein said sensor comprises a metering turbine (129) and said circuit includes at least one flow straightener (128) between the pump and the turbine.

3. Apparatus as claimed in claim 1 or claim 2 including within said framework a reeled input hose (112) arranged to be driven from the first mentioned or a second electric motor and connected within said liquid circuit with said input means at its free end.

4.       Apparatus as claimed in claim 3 wherein said input reel (112) is disposed with a vertical axis.

5.       Apparatus as claimed in claim 4 wherein said input reel (112) has a radius exceeding its axial length and is disposed adjacent the base (102) of the framework.

6.       Apparatus as claimed in claim 5 wherein said output hose reel has an axial length exceeding its radius and is arranged with its axis horizontal above said input hose reel.

7.       Apparatus as claimed in any preceding claim including, within said framework, means (39,111) for maintaining a plurality of gas-containing vessels (17,110) in position within the unit.

8.       Apparatus as claimed in claim 7 in which the vessel position maintaining means comprises a spring loaded retaining member (111).

9. Apparatus as claimed in any of claims 3 to 8 wherein the axis of the input hose reel (112) is off-set towards a front corner of said framework and wherein means (111) for retaining gas cylinders is disposed in the corner diagonally opposite to said one corner.

10. Apparatus as claimed in claim 6 wherein said output hose reel (114) is disposed between said gas cylinders (110) and one side of said framework, and off-set towards the rear of said framework, controls and meter readout (121) being disposed adjacent the front of the framework.

11. Apparatus as claimed in any of claims 2 to 7 including a gas hose coiled in tandem with, or as a combination hose with, said input hose.

12. Apparatus as claimed in any preceding claim wherein said framework is of welded steel construction having angle section roof members, and channel section base members interconnected by hollow section uprights (103), said base frame members being recessed to receive a pair of members defining front and rear fork pockets.

- 4 -

13.     A vehicle for transporting liquid for delivery to selected sites, the vehicle including a platform, a plurality of removably secured tanks on the platform and at least one movable delivery unit as claimed in any preceding claim on the platform.

14.     A vehicle as claimed in claim 13 including two said delivery units disposed back to back and facing opposite sides of the vehicle.

Fig.1

Fig.2

Fig.3

Fig.4

315

Fig.5

Fig.6

*Fig.7*

*Fig.8*

0024846

*Fig.9*

*Fig.10*